# EUROPEAN PATENT SPECIFICATION

(11) **EP 4 254 697 B1**
(45) Date of publication and mention of the grant of the patent: **31.12.2025**
(21) Application number: 23162269.7
(22) Date of filing: 16.03.2023
(51) Int. Cl.: H02G 3/32

(54) **CABLE CLEAT WITH DOUBLE HEMMED CLAMPING FLANGE**
KABELSCHELLE MIT DOPPELGESÄUMTEM KLEMMFLANSCH
SERRE-CÂBLE À BRIDE DE SERRAGE À DOUBLE SERTISSAGE

(30) Priority: 30.03.2022 US 202217708643
(43) Date of publication of application: 04.10.2023
(73) Proprietor: Panduit Corp., Tinley Park, IL 60487 (US)
(72) Inventor: Crouse, Andrew, Bolingbrook (US); Rouleau, Rodney G., Manhattan (US)
(74) Representative: Roberts, Gwilym Vaughan

(56) References cited:
- EP-A1- 3 835 638
- US-A- 1 830 558
- US-A- 5 116 083
- US-A1- 2019 234 533
- UNKNOWN: "PTS ProTect Short-Circuit Cable Straps", HTTPS://WWW.ETSCABLECOMPONENTS.COM/, 21 June 2021 (2021-06-21), pages 1 - 3, XP093072379, Retrieved from the Internet <URL:http://web.archive.org/web/20210621034807/https://www.etscablecomponents.com/product/pts-protect-short-circuit-cable-straps-protect/> [retrieved on 20230809]
- THORNE & DERRICK: "Ellis Patents Cable Cleats - Vulcan Cable Cleat VRT 04 (Stainless Steel Cable Cleats)", 17 November 2013 (2013-11-17), XP093072389, Retrieved from the Internet <URL:https://www.youtube.com/watch?v=ZtLhwkpDSg4> [retrieved on 20230809]

## Description

### Field of the Invention

The present invention relates to a cable cleat, and more particularly to a cable cleat with a double hemmed clamping flange.

### Background of the Invention

Cable cleats are designed to contain cables during a three-phase short circuit event. The electromagnetic fields during a short circuit event can exert high forces on the cables resulting in significant damage if the cables are not held in place. The force exerted on the cable cleat is dependent on the short circuit fault current and the distance between the center of the conductors. During a short circuit event, there can be several failure modes. The cable jackets may tear which could cause exposed wires that would allow current to flow to metal objects. Another example of a failure is that the nut and washer threaded to the clamping bolt securing the cable cleat could pull through the bolt hole allowing the cables to come loose during the short circuit event potentially damaging equipment, property, and personnel.

One example of a cable cleat that is includes a hinged two-piece shell with hemmed outer edges along the two-piece shell. The hemmed outer edges are rounded thereby eliminating the need for a protective liner in the cable cleat. The cable cleat can be formed from stainless steel sheets to create flat blanks that form the upper and lower shells. The process required to bend and finish the cleats can vary but additional steps are required to fold the hemmed outer edges. The bending process to form the hinges and shell curves is common to both hemmed and unhemmed cable cleats. Alternatively, the cable cleat may be created from a roll formed strip. A flat coil of stainless steel is fed into a roll forming line. The flat coil of stainless steel is folded in the roll forming process to create the hemmed outer edges. The hemmed stainless strip can be notched and formed into upper and lower shells. This manufacturing method eliminates some of the scrap associated with flat sheets, but it still produces a moderate amount of scrap. The roll forming process replaces some of the flat blank hem forming steps during manufacture. The roll forming process is quicker than the hem forming process associated with flat blanks. The process of creating the hinges is the same for all hinged cleats. One end of the shell is notched and curled into a barrel that will accept a hinge pin.

Another example of a cable cleat includes an unhemmed two-piece shell. The unhemmed cleats require a protective liner to prevent cable damage that could occur during a short circuit event or during thermal expansion and contraction. The main advantage of an unhemmed cable cleat is the manufacturing process. A slit coil of stainless steel is easily fed into a series of punch dies and forming presses. For a two-piece shell, the process could be a batch process that makes the upper and lower shells separately. The upper and lower shells would then be joined at the hinge and welded to create the completed cleat assembly.

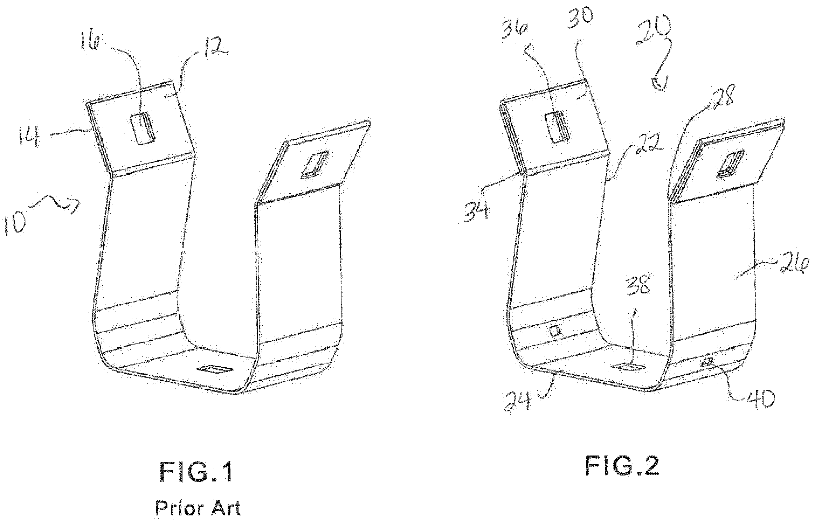

Another example of a cable cleat includes an unhinged one-piece shell with clamping flanges and unhemmed outer edges, e.g., Ellis Patents Vulcan cable cleat. This standard duty cable cleat is designed and offered to be a low-cost option when short circuit forces are moderate. The stainless steel shell is typically a thinner gauge than that of a heavy-duty cable cleat and the edge of the one-piece shell body is not rounded. Thus, the one-piece shell requires a protective liner to prevent cable damage. As illustrated in FIG. 1, the clamping flanges 12 include a typical single hem 14 which provides a weak spot in the cable cleat 10. As discussed above, the clamping bolt or washer and nut can pull through the clamping bolt hole 16 during a short circuit event. As a result, the clamping flange needs to be reinforced with a shim or washer. The clamping bolt hole has another weakness in that a typical carriage bolt used for clamping cannot be used. There is not enough material in the clamping flange of the cable cleat to keep the carriage bolt from turning during tensioning. As a result, the typical clamping carriage bolt is replaced with a hex head bolt. To keep the hex head bolt from turning a molded bolt keeper has also been added to the clamping flange. The clamping flange hem extends past the bend to help reinforce the area. The manufacturing process of this type of cable cleat has a high material utilization. A coil of stainless steel is fed into a series of punching and forming dies. The dies first cut a strip of material from the coil. The hem for the clamping flanges is folded and then the clamping bolt hole is punched. The slugs from the clamping bolt hole are the only stainless steel scrap from the manufacturing process. Once the basic shell is formed, the clamping flange shims must be installed and welded in place. The clamping flange shims have a pre-punched hole. The hole must be aligned with the clamping bolt hole prior to and during welding. The molded bolt keeper and protective liner would be added as part of the final assembly process.

Another example cable cleat includes a hinged two-piece shell with unhemmed outer edges, e.g., CMP Product's Patriot cable cleat. The unhemmed hinged two-piece shell cable cleat was designed and offered to be a lower cost option when short circuit forces are moderate. The stainless steel shell is a thinner gauge than heavy duty cable cleats and the outer edges of the shell body are not rounded. As a result, the shell requires a protective liner to prevent cable damage. The cable cleat also includes single hem clamping flanges which, as discussed above, result in a weak spot during short circuit events. First, the clamping bolt will pull though the clamping bolt hole during a short circuit event thus it needs to be reinforced with a shim or washer. Additionally, there is not enough material to keep a carriage bolt from turning during tensioning. As a result, the typical clamping carriage bolt is replaced with a hex head bolt. To keep the hex head bolt from turning during tensioning, a molded bolt keeper has been added to each clamping flange. The manufacturing process of the hinged two-piece shell with unhemmed outer edges cable cleat has a lower stainless steel material utilization than other designs. A coil of stainless steel is fed into a series of punching and forming dies. The dies first cut a strip of material from the coil. The hem for the clamping flanges is folded and then the clamping bolt hole is punched. The size and shape of the shell are then formed by other dies. Once the basic shell is formed, the clamping flange shims must be installed and welded in place. The clamping flange shims have a pre-punched hole. The hole must be aligned with the clamping bolt hole prior to and during welding. The molded bolt keeper and protective liner are added as part of the final assembly process.

US 5116083 A describes, according to its abstract, a clamp suitable for joining a pair of tubular members such as truck exhaust pipes including a metal band having a reinforcing bar at each end wrapped more than one turn, each wrapped reinforced end forming at least one hold for receiving, threading, and securing a set of bolts and nuts. The band is preferably formed from an aluminized steel, and the reinforcing bars may be non-plated. Embodiments using only the wrapped ends without reinforcing bars, folded rims, beading, and bolt-securing plates are also disclosed.

US 1830558 A describes, according to its introductory paragraph, a clamp of the split ring type which, while not restricted to such use, is especially designed for the purpose of clamping a fishing reel on the reel seat of a rod to insure against accidental displacement of the reel.

Although there are many cable cleat options, it would be desired to provide an improved cable cleat that is designed to have optimized performance and a low manufacturing cost.

### Summary of the Invention

The invention to which the present European patent relates is defined in the appended claims. A cable cleat assembly designed to secure cables during short circuit events. The cable cleat assembly includes a one-piece metal shell. The one-piece metal shell has a bottom, sides extending from the bottom, and clamping flanges extending from the distal end of each side. The clamping flanges are double hemmed clamping flanges. Each double hemmed clamping flange includes a clamping bolt hole designed to receive a fastener to secure the cable cleat assembly. The double hemmed clamping flanges reinforce the cable cleat assembly thereby prevent failures during short circuit events.

### Brief Description of the Drawings

FIG. 1 is a perspective view of a prior art cable cleat with a single hem clamping flange.
FIG. 2 is a perspective view of the cable cleat of the present invention with a double hemmed clamping flange.
FIG. 3 is a perspective view of the cable cleat of FIG. 2 with a spacer installed in the cable cleat.
FIG. 4 is a perspective view of the lower spacer of the cable cleat of FIG. 3.
FIG. 5 is a perspective view of the cable cleat of FIG. 3 with an upper spacer positioned to be installed.
FIG. 6 is a perspective view of the cable cleat of FIG. 3 securing a trefoil cable configuration.
FIG. 7 is a perspective view of the cable cleat of FIG. 3 securing a quad cable configuration.
FIG. 8 is a perspective view of the cable cleat of FIG. 3 securing a single cable.

### Detailed Description

FIG. 2 illustrates a cable cleat 20 with a clamping flange 30 having a double hem 34 of the present invention. The cable cleat 20 includes a one-piece metal shell 22. The formed one-piece shell 22 includes a bottom 24, two sides 26 extending from the bottom 24, and two clamping flanges 30 at the distal end 28 of the sides 26. The one-piece shell 22 does not include a folded hem along the outer edges of the shell as described above with respect to prior art cable cleat shells. Instead, the one-piece metal shell 22 includes rounded edges 32. The rounded edge design of the present invention eliminates the need for a protective liner. As a result, the rounded edge shell reduces manufacturing costs by eliminating the protective liner as well as simplifying the manufacturing process by eliminating the need to install a protective liner.

The cable cleat 20 of the present invention also does not include a hinge. A thinner gauge stainless steel material can be used for the cable cleat 20. The cable cleat manufactured from thinner gauge stainless steel can be manipulated with very little effort. As a result, the cable cleat 20 can be formed from a one-piece shell 22 thereby eliminating the need of a hinge as required in various prior art cable cleats. The elimination of the hinge reduces the scrap produced while creating the hinge and the need for tooling to form the hinge.

At the distal end of the sidewalls, the metal shell is folded over itself multiple times to form clamping flanges 30 having a double hem 34. The double hemmed 34 clamping flanges 30 reinforce the shell 22 of the cable cleat 20. The double hemmed 34 clamping flanges 30 also eliminate the need for shims to strengthen the clamping flanges 30. The clamping flange bolt holes 36 are punched after the metal is folded which facilitates in assembling the cable cleat 20. Welds could also be added to the double hemmed clamping flange 30 to increase the strength of the clamping flange 30, if desired. Additionally, an oversized washer (not illustrated) can be used, if desired, to distribute the clamping force over a larger area and greatly reduce the possibility of the bolt, washer, and nut from pulling through the clamping bolt holes 36.

The cable cleat 20 includes one thru hole 38 at the bottom 24 of the shell 22 for mounting. The thru hole 38 will be sized for a 10 mm carriage bolt or other type of 10mm bolt. As discussed below, the cable cleat 20 also includes punched holes 40 in the sides 26 of the shell 22 for receiving the attachment tabs 66 of a spacer 50.

Cable cleats are normally attached by a fastener directly to a ladder rung or by a bracket attached to the ladder rung. To avoid any damage, cable cleats holding a single or multi conductor cable should not come into contact with the head of the mounting fastener. A spacer is typically installed in the cable cleat to protect the cable from the head of the fastener during short circuit events and cable movement during expansion and contraction. The spacer also enables the cable cleat to receive a range of cable diameters.

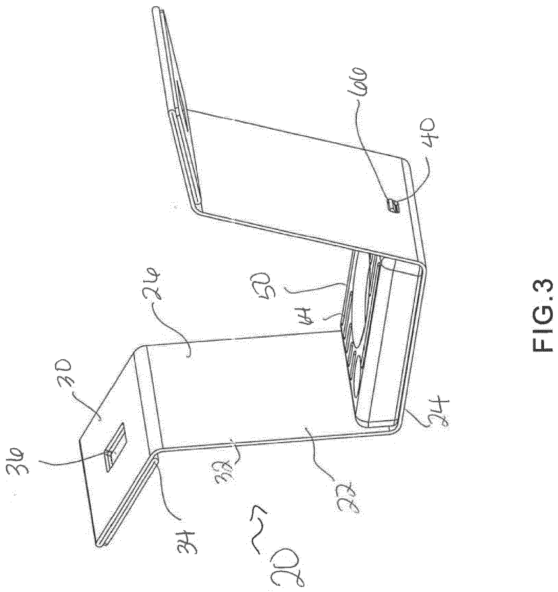

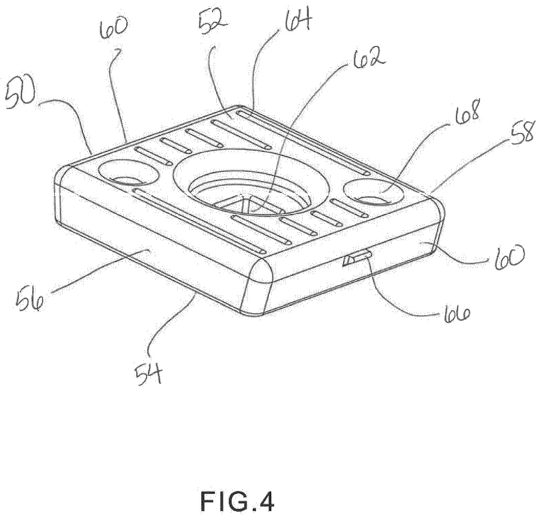

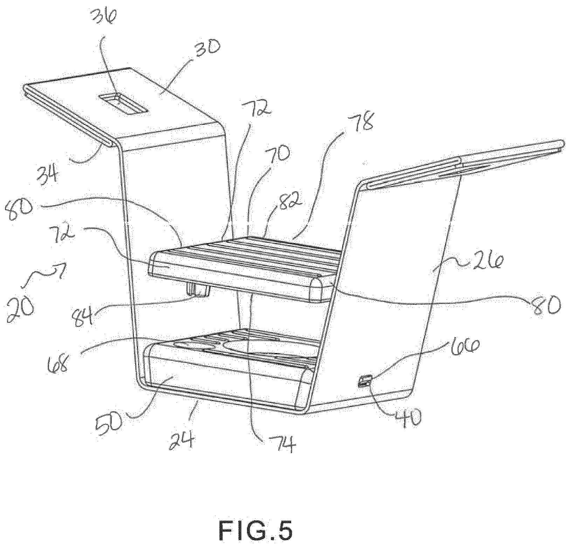

As illustrated in FIG. 3, the cable cleat 20 of the present invention includes a spacer 50. FIG. 4 illustrates a perspective view of the spacer 50. The spacer 50 is rectangular with a top 52, a bottom 54, a front 56, a back 58, and two opposing sides 60. The spacer 50 includes a center opening 62 extending from the top 52 to the bottom 54 for receiving the fastener used to secure the cable cleat 20 to a ladder rack or to a bracket. The spacer 50 also includes a plurality of ribs 64 extending along the top 52. The ribs 64 reduce the axial movement of the cables installed in the cable cleat 20. Each side 60 of the spacer 50 includes an attachment tab 66 extending outwardly away from the spacer 50 at the center of the spacer 50. As described below with respect to FIG. 5, the top 52 of the spacer 50 includes two additional openings 68 for receiving interlocking connectors 84 of an upper or second spacer 70.

Many heavy duty or thicker gauge cable cleats attach spacers to cable cleat via fasteners, such as small screws. However, in the cable cleat 20 of the present invention, the cable cleat shell 22 is not thick enough to receive fasteners. As a result, the attachment tabs 66 extending from the spacer 50 of the present invention snap fit into the punched holes 40 in the sides 26 of the cable cleat shell 22. The attachment tabs 66 enable the spacer 50 to be secured to the cable cleat 20 without the use of fasteners or any adhesives.

As illustrated in FIG. 5, the cable cleat 20 may also include an upper or second spacer 70, if desired. The addition of an upper spacer 70 increases the cable diameter range for the cable cleat 20. The upper spacer 70 is rectangular with a top 72, a bottom 74, a front 76, a back 78, and two opposing sides 80. The top 72 of the upper spacer 70 includes a plurality of ribs 82 for increasing the axial force retention of the cable cleat 20. Interlocking connectors 84 extend from the bottom 74 of the upper spacer 70. The interlocking connectors 84 align with and engage the openings 68 in the spacer 50 enabling the upper spacer 70 to attach to the spacer 50 installed in the cable cleat 20. Thus, the spacer 50 and the upper spacer 70, if used, provides a cushion for the cable secured in the cable cleat 20 and protects the cable from the mounting bolt or other mounting hardware.

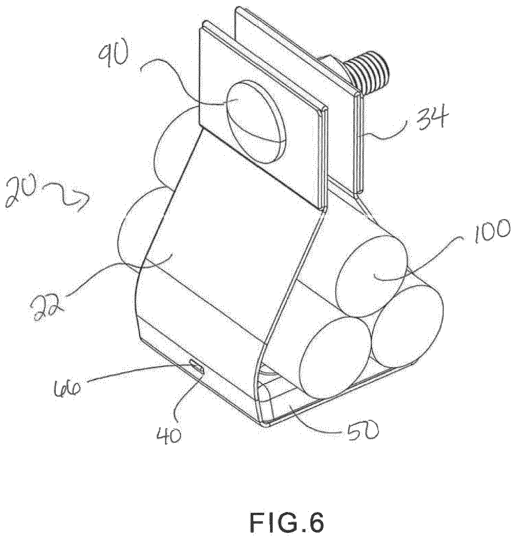

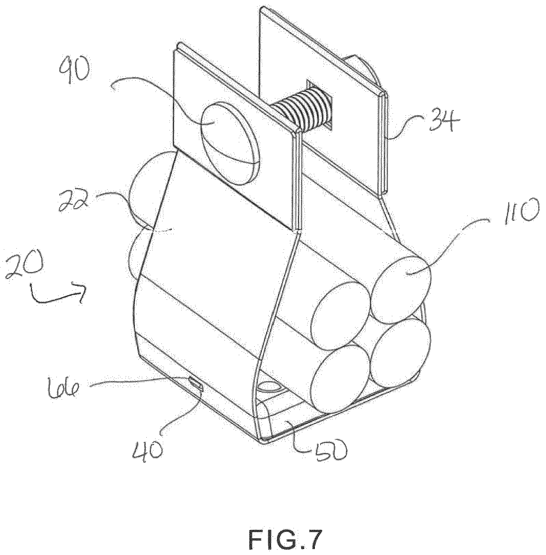

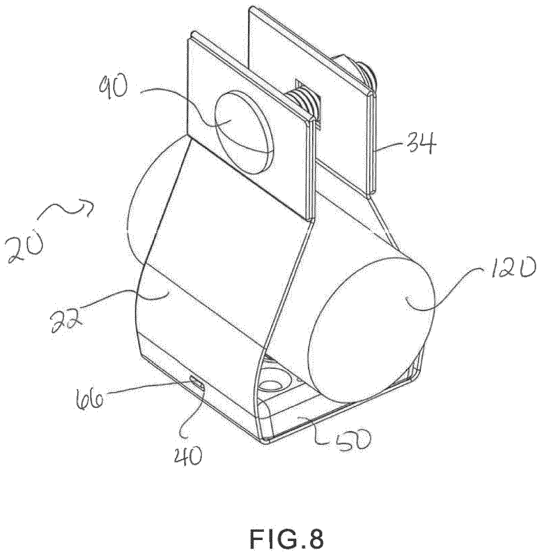

FIGS. 6-8 illustrate the cable cleat of the present invention secured by a fastener 90, such as a bolt and nut, holding cables in various configurations. As illustrated in FIG. 6, the cable cleat may be used to install cables in a trefoil configuration 100. As illustrated in FIG. 7, the cable cleat may be used to install cables in a quad configuration 110. As illustrated in FIG. 8, the cable cleat may be used to install a single cable 120.

The cable cleat 20 of the present invention is manufactured by first placing a fully rounded edge coil in a controlled payout system. The end of the rounded edge coil is fed through a series of straighteners. The straighten strip is then precisely fed into a die for mounting holes, pilot holes, and spacer holes. The strip is then cut from the coil. A controlled shuttling device grips the punched strip using the mounting and pilot holes for precision positioning and movement during the manufacturing process. The controlled shuttle moves the punched strip into forming dies to fold the double hemmed clamping flanges 30. The clamping flanges 30 may be welded together, if desired. The clamping bolt holes 36 are punched thru the double hemmed folded clamping flanges 30. The semi formed cleat is then positioned in a series of dies for final shaping. Finally, the clamping flange hardware, such as a carriage bolt, retaining washer, washer, and nylon lock nut, is added to the cable cleat.

The cable cleat 20 with the double hemmed clamping flanges 30 of the present invention provides many advantages. The double hemmed flange 30 created during the manufacturing process does not require reinforcements. The clamping flange bolt hole 36 is punched after the double hemmed clamping flange 30 is folded. Previous cable cleats are required to use pre-punched washers as rectangular shims to reinforce the clamping flange.

The edges 32 of the cable cleat 20 are fully rounded to protect cable jackets from being damaged during short circuit events. The rounded edges 32 also eliminates the need of an extra hem or a liner to protect the cables. The cable cleat 20 is manufactured from fully rounded edge strip material by folding or punching operations. The cable cleat 20 is made of a thinner material for a more-cost effective cable cleat.

The cable cleat 20 of the present invention does not include a hinge which reduces manufacturing costs by eliminating manufacturing steps, eliminates scrap created when a hinge barrel is formed, and eliminates the need of a hinge pin.

The matter set forth in the foregoing description and accompanying drawings is offered by way of illustration only and not as limitation. The actual scope of the invention is intended to be defined in the following claims when viewed in their proper perspective based on the prior art.

## Claims

1. A cable cleat (20) assembly for securing cables (100, 110, 120) during a short circuit event, the cable cleat assembly comprising:
a one-piece metal shell (22) having a bottom (24), sides (26) extending from the bottom, and clamping flanges (30) extending from the distal end (28) of each side,
wherein the clamping flanges are double hemmed (34) clamping flanges for reinforcing the cable cleat assembly,
wherein each side of the one-piece shell has a punched hole (40); **characterized by**
a spacer (50) having a top (52), a bottom (54), a front (56), a back (58) and opposing sides (60),
wherein each side of the spacer has an attachment tab (66) extending outwardly therefrom,
wherein the attachment tabs are positioned within the punched holes in the sides of the one-piece shell to secure the spacer within the one-piece shell.

2. The cable cleat assembly of claim 1, wherein the one-piece shell has rounded outer edges (32).

3. The cable cleat assembly of any preceding claim, wherein each clamping flange has a hole (36) for receiving a fastener to secure the cable cleat assembly.

4. The cable cleat assembly of claim 3, wherein the holes in the clamping flange have been punched after the shell has been folded to form the double hem.

5. The cable cleat assembly of any preceding claim, wherein the double hemmed flanges are welded for increasing the strength of the clamping flanges.

6. The cable cleat of claim 1, wherein the spacer has a plurality of ribs (64) extending along the top of the spacer for increasing axial retention of the cables.

7. The cable cleat of claim 1, wherein the spacer has a center opening (62) for receiving a fastener to secure the cable cleat assembly.

8. The cable cleat assembly of claim 1, further comprising an upper spacer (70) having a top (72), a bottom (74), a front (76), a back (78), and opposing sides (80), wherein ribs (82) extend from the top of the upper spacer for increasing axial retention of the cables; and wherein interlocking connectors (84) extend from the bottom of the upper spacer.

9. The cable cleat assembly of claim 8, wherein the spacer has openings (68) in the top,
wherein the interlocking connectors of the upper spacer engage the opening in the top of the spacer to secure the upper spacer to the spacer.

10. A method of manufacturing a cable cleat (20) assembly for securing cables (100, 110, 120) during a short circuit event, the method comprising:
providing a one-piece metal shell (22) having a bottom (24), sides (26) extending from the bottom, and clamping flanges (30) extending from the distal end (28) of each side,
double hemming (34) the the distal end of each side to form the clamping flanges for reinforcing the cable cleat assembly;
punching a hole (40) in each side of the one-piece shell; **characterized by**
providing a spacer (50) having a top (52), a bottom (54), a front (56), a back (58) and opposing sides (60),
wherein each side of the spacer has an attachment tab (66) extending outwardly therefrom,
wherein the attachment tabs are configured to be positioned within the punched holes in the sides of the one-piece shell to secure the spacer within the one-piece shell.

11. The method of claim 10, further comprising providing a hole (36) for receiving a fastener to secure the cable cleat assembly in each clamping flange.

12. The method of claim 11, wherein the holes in the clamping flange are punched after the shell is folded to form the double hem.

13. The method of any of claims 10 to 12, wherein the double hemmed flanges are welded for increasing the strength of the clamping flanges.

## Patentansprüche

1. Kabelklemmen- (20) Anordnung zum Sichern von Kabeln (100, 110, 120) während eines Kurzschlussereignisses, wobei die Kabelklemmenanordnung umfasst:
eine einteilige Metallschelle (22) mit einem Boden (24), Seiten (26), die sich von dem Boden aus erstrecken, und Klemmflanschen (30), die sich von dem distalen Ende (28) jeder Seite aus erstrecken,
wobei die Klemmflansche doppelt umgeschlagene (34) Klemmflansche zum Verstärken der Kabelklemmenanordnung sind,
wobei jede Seite der einteiligen Schelle ein gestanztes Loch (40) aufweist; **gekennzeichnet durch** einen Abstandshalter (50) mit einer Oberseite (52), einer Unterseite (54), einer Vorderseite (56), einer Rückseite (58) und gegenüberliegenden Seiten (60),
wobei jede Seite des Abstandshalters eine Befestigungslasche (66) aufweist, die sich von dieser nach außen erstreckt,
wobei die Befestigungslaschen innerhalb der gestanzten Löcher in den Seiten der einteiligen Schelle positioniert sind, um den Abstandshalter innerhalb der einteiligen Schelle zu sichern.

2. Kabelklemmenanordnung nach Anspruch 1, wobei die einteilige Schelle abgerundete Außenkanten (32) aufweist.

3. Kabelklemmenanordnung nach einem der vorhergehenden Ansprüche, wobei jeder Klemmflansch ein Loch (36) zum Aufnehmen eines Befestigungsmittels zum Sichern der Kabelklemmenanordnung aufweist.

4. Kabelklemmenanordnung nach Anspruch 3, wobei die Löcher im Klemmflansch nach einem Falten der Schelle zur Bildung des doppelten Umschlags gestanzt wurden.

5. Kabelklemmenanordnung nach einem der vorhergehenden Ansprüche, wobei die doppelt gefalzten Flansche verschweißt sind, um die Festigkeit der Klemmflansche zu erhöhen.

6. Kabelklemme nach Anspruch 1, wobei der Abstandshalter mehrere Rippen (64) aufweist, die sich entlang der Oberseite des Abstandshalters erstrecken, um die axiale Fixierung der Kabel zu erhöhen.

7. Kabelklemme nach Anspruch 1, wobei der Abstandshalter eine mittige Öffnung (62) zum Aufnehmen eines Befestigungsmittels zum Sichern der Kabelklemmenanordnung aufweist.

8. Kabelklemmenanordnung nach Anspruch 1, ferner umfassend einen oberen Abstandshalter (70) mit einer Oberseite (72), einer Unterseite (74), einer Vorderseite (76), einer Rückseite (78) und gegenüberliegenden Seiten (80), wobei sich Rippen (82) von der Oberseite des oberen Abstandshalters erstrecken, um eine axiale Fixierung der Kabel zu erhöhen; und wobei sich ineinandergreifende Verbinder (84) von der Unterseite des oberen Abstandshalters erstrecken.

9. Kabelklemmenanordnung nach Anspruch 8, wobei der Abstandshalter Öffnungen (68) in der Oberseite aufweist, wobei die ineinandergreifenden Verbinder des oberen Abstandshalters in die Öffnung in der Oberseite des Abstandshalters eingreifen, um den oberen Abstandshalter am Abstandshalter zu sichern.

10. Verfahren zum Herstellen einer Kabelklemmen- (20) Anordnung zum Sichern von Kabeln (100, 110, 120) während eines Kurzschlussereignisses, wobei das Verfahren umfasst:
Bereitstellen einer einteiligen Metallschelle (22) mit einem Boden (24), Seiten (26), die sich von dem Boden erstrecken, und Klemmflanschen (30), die sich von dem distalen Ende (28) jeder Seite erstrecken,
doppeltes Umschlagen (34) des distalen Endes jeder Seite, um die Klemmflansche zur Verstärkung der Kabelklemmenanordnung zu bilden;
Stanzen eines Lochs (40) in jede Seite der einteiligen Schelle; **gekennzeichnet durch**
Bereitstellen eines Abstandshalters (50) mit einer Oberseite (52), einer Unterseite (54), einer Vorderseite (56), einer Rückseite (58) und gegenüberliegenden Seiten (60),
wobei jede Seite des Abstandshalters eine Befestigungslasche (66) aufweist, die sich von dieser nach außen erstreckt,
wobei die Befestigungslaschen so konfiguriert sind, dass sie in den gestanzten Löchern in den Seiten der einteiligen Schelle positioniert werden können, um den Abstandshalter in der einteiligen Schelle zu sichern.

11. Verfahren nach Anspruch 10, ferner umfassend Bereitstellen eines Lochs (36) zum Aufnehmen eines Befestigungsmittels, um die Kabelklemmenanordnung in jedem Klemmflansch zu sichern.

12. Verfahren nach Anspruch 11, wobei die Löcher in dem Klemmflansch nach einem Falten der Schelle zur Bildung des doppelten Umschlags gestanzt werden.

13. Verfahren nach einem der Ansprüche 10 bis 12, wobei die doppelt umgeschlagenen Flansche verschweißt werden, um die Festigkeit der Klemmflansche zu erhöhen.

## Revendications

1. Ensemble serre-câble (20) destiné à fixer des câbles (100, 110, 120) durant un événement de court-circuit, l'ensemble serre-câble comprenant :
une enveloppe métallique monopièce (22) ayant un fond (24), des côtés (26) s'étendant depuis le fond, et des ailes de serrage (30) s'étendant depuis l'extrémité distale (28) de chaque côté,
dans lequel les ailes de serrage sont des ailes de serrage à double rabat (34) pour renforcer l'ensemble serre-câble,
dans lequel chaque côté de l'enveloppe monopièce a un trou perforé (40) ; **caractérisé par** une entretoise (50) ayant un haut (52), un fond (54), un avant (56), un arrière (58), et des côtés opposés (60),
dans lequel chaque côté de l'entretoise a une patte d'attache (66) s'étendant vers l'extérieur depuis celui-ci,
dans lequel les pattes d'attache sont positionnées à l'intérieur des trous perforés dans les côtés de l'enveloppe monopièce pour fixer l'entretoise à l'intérieur de l'enveloppe monopièce.

2. Ensemble serre-câble de la revendication 1, dans lequel l'enveloppe monopièce a des bords extérieurs arrondis (32).

3. Ensemble serre-câble d'une quelconque revendication précédente, dans lequel chaque aile de serrage a un trou (36) destiné à recevoir un organe de fixation pour fixer l'ensemble serre-câble.

4. Ensemble serre-câble de la revendication 3, dans lequel les trous dans l'aile de serrage ont été perforés après que l'enveloppe a été pliée pour former le double rabat.

5. Ensemble serre-câble d'une quelconque revendication précédente, dans lequel les ailes à double rabat sont soudées pour augmenter la résistance des ailes de serrage.

6. Serre-câble de la revendication 1, dans lequel l'entretoise a une pluralité de nervures (64) s'étendant le long du haut de l'entretoise pour augmenter la retenue axiale des câbles.

7. Serre-câble de la revendication 1, dans lequel l'entretoise a une ouverture centrale (62) destinée à recevoir un organe de fixation pour fixer l'ensemble serre-câble.

8. Ensemble serre-câble de la revendication 1, comprenant en outre une entretoise supérieure (70) ayant un haut (72), un fond (74), un avant (76), un arrière (78), et des côtés opposés (80), dans lequel des nervures (82) s'étendent depuis le haut de l'entretoise supérieure pour augmenter la retenue axiale des câbles ; et dans lequel des organes de raccordement à enclenchement (84) s'étendent depuis le fond de l'entretoise supérieure.

9. Ensemble serre-câble de la revendication 8, dans lequel l'entretoise a des ouvertures (68) dans le haut, dans lequel les organes de raccordement à enclenchement de l'entretoise supérieure entrent en prise avec l'ouverture dans le haut de l'entretoise pour fixer l'entretoise supérieure à l'entretoise.

10. Procédé de fabrication d'un ensemble serre-câble (20) destiné à fixer des câbles (100, 110, 120) durant un événement de court-circuit, le procédé comprenant :
la fourniture d'une enveloppe métallique monopièce (22) ayant un fond (24), des côtés (26) s'étendant depuis le fond, et des ailes de serrage (30) s'étendant depuis l'extrémité distale (28) de chaque côté,
le double rabattage (34) de l'extrémité distale de chaque côté pour former les ailes de serrage pour renforcer l'ensemble serre-câble ;
la perforation d'un trou (40) dans chaque côté de l'enveloppe monopièce ; **caractérisé par**
la fourniture d'une entretoise (50) ayant un haut (52), un fond (54), un avant (56), un arrière (58), et des côtés opposés (60),
dans lequel chaque côté de l'entretoise a une patte d'attache (66) s'étendant vers l'extérieur depuis celui-ci,
dans lequel les pattes d'attache sont configurées pour être positionnées à l'intérieur des trous perforés dans les côtés de l'enveloppe monopièce pour fixer l'entretoise à l'intérieur de l'enveloppe monopièce.

11. Procédé de la revendication 10, comprenant en outre la fourniture d'un trou (36) destiné à recevoir un organe de fixation pour fixer l'ensemble serre-câble dans chaque aile de serrage.

12. Procédé de la revendication 11, dans lequel les trous dans l'aile de serrage sont perforés après que l'enveloppe est pliée pour former le double rabat.

13. Procédé de quelconques des revendications 10 à 12, dans lequel les ailes à double rabat sont soudées pour augmenter la résistance des ailes de serrage.
